Europäisches Patentamt

(19) European Patent Office

Office européen des brevets

(11) Numéro de publication: **0 228 139**
**B1**

(12) **FASCICULE DE BREVET EUROPEEN**

(45) Date de publication du fascicule du brevet:
16.08.89

(21) Numéro de dépôt: **86202338.9**

(22) Date de dépôt: **19.12.86**

(51) Int. Cl.⁴: **B 01 D 13/02**

(54) Procédé de régulation d'un électrodialyseur et installation perfectionnée d'électrodialyse.

(30) Priorité: **02.01.86 FR 8600072**

(43) Date de publication de la demande:
**08.07.87 Bulletin 87/28**

(45) Mention de la délivrance du brevet:
**16.08.89 Bulletin 89/33**

(84) Etats contractants désignés:
**AT BE CH DE ES FR GB GR IT LI LU NL SE**

(56) Documents cités:
**FR-A- 2 183 916**

**JOURNAL OF APPLIED CHEMISTRY OF THE U.S.S.R.,
vol. 48, no. 10, octobre 1975, pages 2241-2243, Plenum
Publishing Corporation, New York, US; N.Ya. LYUBMAN
et al.: "Purification of cyanide-containing waste water
by electrodialysis"
CHEMICAL ABSTRACTS, vol. 88, no. 24, 12 juin 1978,
page 403, résumé no. 176695m, Columbus, Ohio, US;
G.W. BODAMER: "Electrodialysis for clos ed loop
control of cyanide rinse waters", & GOV. REP.
ANNOUNCE. INDEX 1977, 77(26),190**

(73) Titulaire: **UNIVERSITE DES SCIENCES ET TECHNIQUES
DU LANGUEDOC (Montpellier I), Place Eugène
Bataillon, F-34060 Montpellier (FR)**
Titulaire: **LEGRAND Société Anonyme:, 128 Avenue du
Maréchal de Lattre de Tassigny, F-87011 Limoges (FR)**

(72) Inventeur: **Gal, Jean-Yves, 75 impasse du Dragon Le
Clos Saint Georges, F-34000 Montpellier (FR)**
Inventeur: **Chiapello, Jean-Michel, 4 rue Castel Moton,
F-34000 Montpellier (FR)**
Inventeur: **Peyrot, Martial, 14 avenue de la Révolution,
F-87000 Limoges (FR)**
Inventeur: **Tourneux, Etienne, 6 rue Pierre Brossolette,
F-87000 Limoges (FR)**

(74) Mandataire: **Barre, Philippe, Cabinet
Barre-Gatti-Laforgue 95 rue des Amidonniers,
F-31069 Toulouse Cédex (FR)**

**Description**

L'invention concerne un procédé de régulation d'un électrodialyseur; elle vise plus particulièrement un procédé de régulation d'un électrodialyseur de bain cyanuré métallique. Elle s'étend à une installation perfectionnée d'électrodialyse, susceptible de permettre la mise en œuvre du procédé dans le cas de bains cyanurés ou d'être appliquée à d'autres types de bain, notamment bain acide métallique.

L'électrodialyse est un procédé consistant à concentrer les sels d'une solution, par passage à travers un empilement de mebranes alternativement échangeuses d'anions et de cations, placées dans un champ électrique; ce procédé conduit à l'obtention d'une solution concentrée et d'une solution diluée. Il est en particulier utilisable dans le cas de bains métalliques pour permettre le recyclage de bains de rinçage de pièces ayant subi une électrodéposition (galvanoplastie): le procédé permet alors de concentrer les bains de rinçage afin de les ré-utiliser ensuite comme bains d'électrodéposition. Un tel processus fournit trois avantages essentiels en pratique: récupération des matières premières des bains de rinçage (supérieure à 90% pour des bains cyanurés), diminution des rejets et donc du volume des installations de dépollution nécessaires, recyclage des eaux de rinçage. l'application la plus importante de ce type d'électrodialyse réside dans le traitement des bains cyanurés métalliques qui sont les plus utilisés en galvanoplastie.

Toutefois, la mise en œuvre de l'électrodialyse sur ces bains cyanurés métalliques a mis en évidence un grave défaut pratique qui, à l'heure actuelle, en limite considérablement la diffusion. En effet, au cours de l'électrodialyse, il se produit très fréquemment un blocage du fonctionnement, avec colmatage et risque de détérioration des membranes échangeuses d'ions. Jusqu'à présent, ces phénomènes restent inexpliqués et il n'existe aucune solution satisfaisante pour les supprimer.

La présente invention se propose de fournir un procédé de régulation d'électrodialyseur, permettant d'écarter les phénomènes de blocage et de colmatage sus-évoqués.

L'invention vise ainsi à autoriser une large diffusion des procédés d'électrodialyse des bains cyanurés métalliques afin de bénéficier pleinement de leurs avantages spécifiques résidant en particulier dans leur efficacité très élevée en phase de bon fonctionnement. En particulier, l'invention peut être applicable pour des bains cyanurés des métaux ou alliages suivants: cuivre, argent, zinc, laiton...

Un autre objectif est de fournir, de façon plus générale, une installation d'électrodialyse perfectionnée assurant la régulation d'un électrodialyseur du type comportant un empilement de membranes échangeuses d'ions, des électrodes situées de part et d'autre dudit empilement, au moins un conduit d'entrée d'un bain à traiter, un conduit de sortie de solution concentrée et un conduit de sortie de solution diluée, afin de prémunir ledit électrodialyseur contre les phénomènes de blocage de fonctionnement et phénomènes de colmatage des membranes.

Conformément à l'invention, le procédé de régulation d'un électrodialyseur du type sus-évoqué, alimenté à son entrée en un bain cyanuré métallique, consiste à mesurer la teneur en cyanure libre de la solution diluée à la sortie de l'électrodialyseur et à ajouter dans la bain cyanuré à l'entrée de l'électrodialyseur, une solution de cyanure contenant des cyanures libres en quantité fonction inverse de la teneur mesurée.

Les inventeurs ont mis en évidence que la composition des solutions de sortie évoluait généralement au cours du déroulement de l'électrodialyse, et les analyses effectuées ont montré que les complexes cyanurés contenus dans ces solutions n'étaient pas les mêmes au cours du temps: plusieurs types de complexes plus ou moins chargés en cyanure ont ainsi été mis en évidence, en particulier $M(CN)_4^{3-}$, $M(CN)_3^{2-}$, $M(CN)_2^{-}$ dans le cas où le métal M est de l'argent ou du cuivre. La nature de ces complexes peut évoluer au niveau de la solution diluée, jusqu'à la formation de complexes peu chargés en cyanure qui sont insolubles (MCN dans l'exemple précité) et même jusqu'à l'obtention d'hydroxydes métalliques (MOH). En outre, les inventeurs ont pu observer que le colmatage des membranes se produisait, de façon surprenante, du côté de la solution diluée. En rapprochant les deux faits sus-évoqués, l'on a pu déduire que c'était ces espèces insolubles qui engendraient le colmatage des membranes et le blocage du fonctionnement. Une étude théorique et expérimentale a montré que la formation des complexes insolubles provenaint d'une carence de cyanure libre dans le bain d'entrée.

Ainsi, le procédé de l'invention conduit è ajouter des cyanures dans le bain d'entrée dès qu'un risque de formation de complexes insolubles apparaît, afin de rester dans les conditions correspondant à la seule présence des complexes solubles.

Dans certaines cas, en galvanoplastie, la concentration en métal des bains cyanurés à traiter est peu variable et reste fixée autour d'une valeur donnée. Dans ce cas, le procédé de l'invention peut être mis en œuvre en déterminant préalablement, pour la valeur de la concentration en métal du bain concerné, un seuil de teneur en cyanure libre supérieur à la teneur limite correspondant à la limite de solubilité des cyanures métalliques et des hydroxydes métalliques, et en ajoutant dans le bain cyanuré à traiter la solution de cyanure lorsque la teneur mesurée devient inférieure ou égale au seuil prédéterminé.

Le seuil précité est déterminé de façon à garantir qu'au voisinage immédiat des membranes, la limite de solubilité n'est pas dépassée compte tenu du gradient de concentration existant dans la couche de diffusion.

En pratique, le seuil de teneur peut être déterminé, une fois pour toute, par un essai réalisé sur un bain échantillon de concentration correspondante à celle du bain à traiter, essai consistant à repérer la teneur en cyanure libre à partir de laquelle le rendement de l'électrodialyseur subit une décroissance brusque et à choisir un seuil de teneur égal à cette teneur repérée augmentée d'une marge de sécurité.

Dans d'autres cas, le bain cyanuré à traiter présente une concentration en métal variable dans le temps: c'est notamment le cas en galvanoplastie lorsque les pièces subissent une électrodéposition par séries, à fréquences variables. Dans ce cas, le procédé de l'invention peut être mis en œuvre en établissant préalablement, en fonction de la conductivité, la courbe de variation d'un seuil de teneur en cyanure libre supérieur à la teneur limite correspondant à la limite de solubilité des cyanures métalliques et des hydroxydes métalliques, en mesurant la conductivité du bain à la sortie diluée de l'électrodialyseur, et en ajoutant dans le bain cyanuré à traiter la solution de cyanure lorsque la teneur mesurée devient inférieure ou égale au seuil qui correspond à la valeur mesurée de la conductivité.

De la même façon que précédemment, on garantit ainsi qu'au voisinage immédiat des membranes, la limite de solubilité n'est pas dépassée dans la couche de diffusion, quelle que soit la concentration initiale du bain en métal.

En pratique, la couche de variation de seuil de teneur peut être établie par des essais réalisés sur des bains échantillons de concentrations échelonnées, chaque essai consistant à mesurer la conductivité du bain et à repérer la teneur en cyanure libre à partir de laquelle le rendement de l'électrodialyseur subit une décroissance brusque, le seuil de teneur étant choisi égal à cette teneur repérée, augmentée d'une marge de sécurité.

Il est à noter qu'il est possible pour des bains de concentration en métal variable, de mettre en œuvre le procédé dans les conditions du premier cas susévoqué. Il suffit alors de déterminer le seuil de teneur en supposant le bain à la concentration en métal la plus élevée rencontrée (cas le plus défavorable). Ce mode de mise en œuvre conduit à ajouter des cyanures en excès mais implique un équipement de mise en œuvre plus léger.

Selon une autre caractéristique du procédé, l'on réalise une mesure continue ou séquentielle de la teneur en cyanure libre de la solution diluée et l'on commande l'injection d'un débit continu de solution de cyanure dans le bain à traiter lorsque la teneur mesurée passe au-dessous du seuil de teneur, et l'arrêt de cette injection lorsque cette teneur mesurée repasse au-dessus dudit seuil. Une telle mise en œuvre conduit à un asservissement très simple en tout ou rien.

Par ailleurs, selon un mode de mise en œuvre préféré, la mesure de la teneur en cyanure libre consiste à prélever un débit de solution diluée, à l'amener à circuler dans une cellule contenant une électrode spécifique du cyanure libre et une électrode de référence, et à mesurer le signal électrique entre les deux électrodes, représentatif du $pCN^-$. Le $pCN^-$, fonction inverse de la teneur en cyanure libre (colog de cette teneur) est représentative de cette teneur: pour une concentration en métal donnée, la quantité de solution de cyanure ajoutée sera une fonction directe du $pCN^-$. On peut en particulier choisir comme électrode spécifique, un électrode polycristalline du type fabriqué par la Société «TACUSSEL» réf. «PCN 211». Les cellules à circulation utilisées pour cette mesure sont connues en soi et on peut notamment utiliser une cellule fabriquée par la société sus-évoquée sous la référence «CCES 2».

On a pu constater que la mesure était influencée par la force ionique de la solution et des variations de celle-ci peuvent conduire à des erreurs. Pour pallier ce défaut, selon une autre caractéristique de l'invention, l'on mélange au débit de solution diluée prélevée, une solution tampon de force ionique, apte à conférer au mélange une force ionique sensiblement constante, très supérieure à celle de la solution diluée.

Par ailleurs, la solution de cyanure ajoutée est avantageusement une solution de cyanure de sodium ou de potassium.

L'invention s'étend à une installation d'électrodialyse perfectionnée, permettant en particulier de mettre en œuvre le procédé ci-dessus défini dans le cas des bains cyanurés métalliques. Cette installation comprend un électrodialyseur du type déjà évoqué, auquel est associé:
— des moyens de prélèvement reliés au conduit de sortie de la solution diluée,
— une cellule de mesure potentiométrique ou ampérémétrique, alimentée par les moyens de prélèvement et adaptée pour délivrer un signal de mesure, fonction de la teneur en une espèce ionique prédéterminée de la solution diluée,
— une unité de traitement du signal de mesure issu de la cellule adaptée pour délivrer un signal de commande,
— un réservoir d'une solution contenant des espèces ioniques précitées,
— un circuit de distribution de la solution contenue dans le réservoir vers l'entrée de l'électrodialyseur, ledit circuit comprenant une pompe commandée par le signal de commande issu de l'unité de traitement précitée.

En outre, selon une autre caractéristique de l'installation, ces moyens sont avantageusement complétés par des moyens de mesure de la conductivité du bain à la sortie de solution diluée, l'unité de traitement recevant le signal de conductivité issu de ces moyens de mesure et étant d'un type programmable, adapté pour pouvoir délivrer un signal de commande fonction du signal de mesure issu de la cellule et du signal de conductivité.

La description qui suit en référence aux dessins annexés présente schématiquement un mode de réalisation d'une installation d'électrodialyse conforme à l'invention et fournit des exemples illustrant la mise en œuvre du procédé; sur ces dessins:
la figure 1 est une vue schématique de cette installation,
la figure 2 est un diagramme obtenu dans le cas d'un bain cyanuré de cuivre.

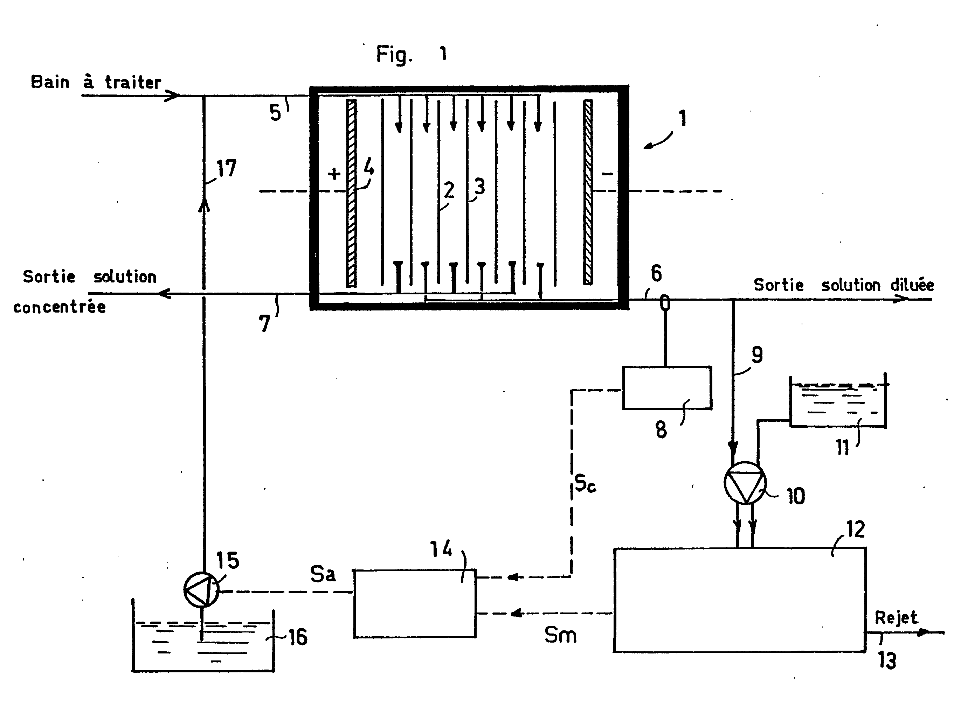

L'installation d'électrodialyse perfectionnée représentée à la figure 1 comprend un électrodialyseur 1 de type classique à écoulement en nappes, comportant un empilement de membranes alternativement échangeuses de cations 2 et échangeuses d'anions 3, placées dans un champ électrique créé par des électrodes 4. Le bain à traiter est injecté par un conduit 5 dans les cellules d'électrodialyse; la solution diluée est recueillie dans un conduit 6 et la solution concentrée est recueillie dans un conduit 7.

Une unité de mesure de conductivité 8 est associée à la sortie de la solution diluée 6; cette unité de type classique, comprenant une sonde située dans le conduit de sortie 6, délivre en continu un signal $S_c$ représentatif de la conductivité de la solution diluée.

En outre, un faible débit est prélevé sur la sortie de la solution diluée 6 par un conduit 9 grâce à une pompe péristaltique à deux voies 10. Cette pompe prélève également une solution tampon de force ionique dans un réservoir 11. Dans les exemples, cette solution était une solution de nitrate de sodium concentrée, ne modifiant pas le pH de la solution diluée prélevée par le conduit 9.

Les solutions sont délivrées dans une cellule à circulation 12 du type cellule «TACUSSEL Réf. CCES 2». Cette cellule comprend de façon classique un agitateur magnétique, une électrode spécifique de l'espèce ionique visée (électrode du type «TACUSSEL réf. PCN 2M» dans le cas du cyanure), une électrode de référence, notamment à sulfate de mercure, et des moyens de mesure du signal électrique entre électrodes, notamment un millivolmètre délivrant un signal de mesure $S_m$ représentatif de la teneur en ion libre concerné. En l'exemple du cyanure, ce signal est directement proportionnel au $pCN^-$. En outre, la cellule 12 comporte un conduit de rejet 13 du faible débit prélevé.

Les signaux $S_c$ et $S_m$ sont délivrés vers une unité de traitement 14 comprenant en l'exemple un microprocesseur programmable qui fournit un signal $S_a$ d'asservissement d'une pompe péristaltique 15. La commande de la pompe 15 s'effectue en tout ou rien en fonction du signal $S_a$. Comme on le verra plus loin, ce signal $S_a$ est engendré à partir des signaux $S_m$ et $S_c$, par comparaison avec une fonction de seuil programmée f $(S_m , S_c)$.

La pompe 15 prélève un débit dans un réservoir 16 contenant une solution de cyanure de sodium ou de potassium. Elle refoule cette solution dans un conduit 17 reliée au conduit 5 d'entrée du bain à traiter.

Les exemples qui suivent illustrent le procédé de l'invention, mis en œuvre au moyen de l'installation ci-dessus décrite dans le cas d'un bain de cyanure de cuivre.

*Exemple 1*

Dans cet exemple, le bain à traiter est un bain de cyanure de cuivre ayant une concentration molaire en cuivre de $4.10^{-2}$ M, sensiblement constante.

Dans un premier temps, on bloque la pompe 15 afin de supprimer l'addition de cyanure par le conduit 17. Les conditions de fonctionnement ont été les suivantes:
— 200 membranes anioniques de type «ASAHI»,
— 200 membranes cationiques de type analogue,
— Débit d'entrée: 14 m³/h,
— Débit de solution diluée: 7 m³/h,
— Débit de solution concentrée: 7 m³/h,
— Pression relative sur sortie diluée: 0,8 bar,
— Pression relative sur sortie concentrée: 0,8 bar,
— Différence de potentiel entre électrodes (4): 170 volts,
— Débit prélevé par le conduit (9): $16.10^{-5}$ m³/h.

Le rendement exprimé en pourcentage de métal recueilli dans la solution concentrée par rapport au métal initial dans le bain à traiter, demeure voisin de 97% pendant 1 heure et chute brutalement à 92%. La valeur du $pCN^-$ (fourni par le signal $S_m$) augmente au cours de cette période et atteint la valeur de 1,6. La chute de rendement s'accompagne ensuite d'une chute du débit de 36%. Il se produit un dépôt sur les membranes et le décolmatage nécessite le démontage et le lavage de l'empilement.

Le $pCN^-$ correspondant à la limite de solubilité est donc approximativement égal à 1,6 et l'on choisit un seuil pratique de 1,25 à ne pas dépasser.

Ce seuil est programmé dans l'unité 14 de façon que celle-ci délivre un signal $S_a$ de mise en route de la pompe 15 lorsque le signal $S_m$ dépasse ce seuil, avec arrêt lorsque le signal $S_a$ redevient inférieur à celui-ci. (Dans cet exemple, le signal $S_c$ n'est pas utilisé).

L'essai est renouvelé avec la pompe 15 en état de fonctionnement, dans les mêmes conditions que précédemment.

On a pu constater une mise en route de la pompe au bout de 30 minutes environ. Le débit de solution refoulé par le conduit 15 était de 2 litres/heure, la concentration de la solution en cyanure de sodium étant de 300 g/l.

L'électrodialyseur a ainsi fonctionné pendant une journée entière sans chute de rendement et sans colmatage (le rendement demeurant fixé à environ 97%), la pompe 15 étant mise en route et arrêtée à de multiples reprises.

*Exemple 2*

Dans cet exemple, la concentration en cuivre du bain à traiter a été amenée à varier, les conditions de fonctionnement étant similaires à celles de l'exemple 1.

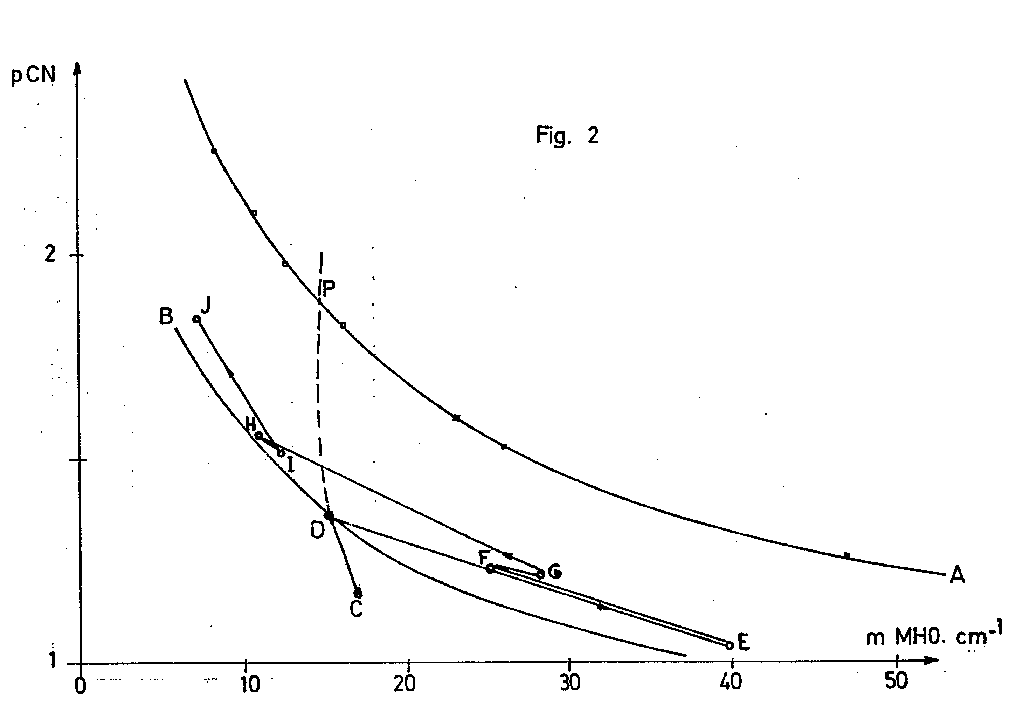

Dans une première phase, l'on a bloqué la pompe 15 et l'on a établi par points (sept points expérimentaux, chacun obtenu comme précédemment), les courbes A et B du diagramme de la figure 2 donnant le pCN en fonction de la conductivité (fonction de la concentration en métal du bain).

La courbe A est approximative car l'instant de début de chute du rendement n'est pas très ponctuel. La courbe B est déduite de la courbe A avec une marge de sécurité de l'ordre de 0,4 unité de pCN.

La fonction seuil f $(S_m, S_c)$ est saisie dans l'unité de traitement, de façon que, pour une valeur de $S_c$ donnée, celle-ci délivre un signal de mise en marche de la pompe lorsque le signe $S_m$ dépasse le seuil donné par la fonction.

La mise en œuvre du procédé proprement dit est ensuite réalisée avec la pompe 15 en état de fonctionnement, en prévoyant des cycles d'augmentation et d'abaissement de la concentration en métal du bain à traiter, dans une fourchette molaire s'étendant entre $10^{-2}$ M et $4.10^{-2}$ M (fourchette pratique de variation de la concentration en cuivre des bains de rinçage en galvanoplastie).

Le fonctionnement, avec mises en route et arrêts répétés de la pompe, a duré une journée entière et le rendement est resté supérieur ou égal à 96%.

La ligne C D E F G H I J schématisée à la figure 2 illustre l'évolution du système depuis un point C de début de fonctionnement: la décroissance de la conductivité et l'augmentation du pCN amènent le système au point D où la pompe se met en marche. Le système évolue alors autour de la courbe B grâce aux corrections du pCN (chemin fonction des variations de la concentration en métal du bain à traiter). En traits discontinus, on a schématisé l'évolution du système si l'addition de cyanure n'était pas assurée: un colmatage intervient alors rapidement au point P.

## Revendications

1. Procédé de régulation d'un électrodialyseur de bain cyanuré métallique du type comprenant un empilement de membranes échangeuses d'ions placées dans un champ électrique, une entrée de bain cyanuré à traiter, une sortie de solution concentrée et une sortie de solution diluée, ledit procédé étant caractérisé en ce qu'il consiste à mesurer la teneur en cyanure libre de la solution diluée à la sortie de l'électrodialyseur et à ajouter dans le bain cyanuré à l'entrée de l'électrodialyseur, une solution de cyanure contenant des cyanures libres en quantité fonction inverse de la teneur mesurée.

2. Procédé selon la revendication 1, pour la régulation d'un électrodialyseur alimenté en bain cyanuré de concentration en métal donnée très approximativement constante, caractérisé en ce que l'on détermine préalablement, pour la valeur de la concentration en métal du bain concerné, un seuil de teneur en cyanure libre supérieur à la teneur limite correspondant à la limite de solubilité des cyanures métalliques et des hydroxydes métalliques, et l'on ajoute dans le bain cyanuré à traiter la solution de cyanure lorsque la teneur mesurée devient inférieure ou égale au seuil prédéterminé.

3. Procédé selon la revendication 2, caractérisé en ce que le seuil de teneur est déterminé par un essai réalisé sur un bain échantillon de concentration correspondant à celle du bain à traiter, consistant à repérer la teneur en cyanure libre à partir de laquelle le rendement de l'électrodialyseur subit une décroissance brusque et à choisir un seuil de teneur égal à cette teneur repérée augmentée d'une marge de sécurité.

4. Procédé selon la revendication 1, pour la régulation d'un électrodialyseur alimenté en bain cyanuré métallique, de concentration en métal variable dans le temps, caractérisé en ce que l'on établit préalablement, en fonction de la conductivité, la courbe de variation d'un seuil de teneur en cyanure libre supérieur à la teneur limite correspondant à la limite de solubilité des cyanures métalliques et des hydroxydes métalliques, l'on mesure la conductivité du bain à la sortie diluée de l'électrodialyseur et l'on ajoute dans le bain cyanuré à traiter la solution de cyanure lorsque la teneur mesurée devient inférieure ou égale au seuil correspondant à la valeur mesurée de la conductivité.

5. Procédé selon la revendication 4, caractérisé en ce que la courbe de variation du seuil de teneur est établie par des essais réalisés sur des bains échantillons de concentrations échelonnées, chaque essai consistant à mesurer la conductivité du bain et à repérer la teneur en cyanure libre à partir de laquelle le rendement de l'électrodialyseur subit une décroissance brusque, le seuil de teneur étant choisi égal à cette teneur repérée, augmentée d'une marge de sécurité.

6. Procédé de régulation selon l'une des revendications 1, 2, 3, 4 ou 5, caractérisé en ce que l'on réalise une mesure continue ou séquentielle de la teneur en cyanure libre de la solution diluée et l'on commande l'injection d'un débit continu de solution de cyanure dans le bain à traiter lorsque la teneur mesurée passe au-dessous du seuil de teneur et l'arrêt de cette injection lorsque cette teneur mesurée repasse au-dessus dudit seuil.

7. Procédé de régulation selon la revendication 6, caractérisé en ce que la mesure de la teneur en cyanure libre consiste à prélever un débit de solution diluée, à l'amener à circuler dans une cellule contenant une électrode spécifique du cyanure libre et une électrode de référence, et à mesurer le signal électrique entre les deux électrodes, représentatif du pCN.

8. Procédé de régulation selon la revendication 7, caractérisé en ce que l'on mélange au débit de solution diluée prélevée, une solution tampon de force ionique, apte à conférer au mélange une force ionique sensiblement constante, très supérieure à celle de la solution diluée.

9. Procédé de régulation selon l'une des revendications 1, 2, 3, 4, 5, 6, 7 ou 8, caractérisé en ce que l'on ajoute une solution de cyanure de sodium ou de potassium .

10. Installation d'électrodialyse permettant, en particulier, la mise en œuvre du procédé conforme à l'une des revendications précédentes, comprenant un électrodialyseur (1) du type comportant un empilement de membranes échangeuses d'ions (2, 3), des électrodes (4) situées de part et d'autres dudit empilement, au moins un conduit (5) d'entrée d'un bain à traiter, un conduit (7) de sortie de solution concentrée et un conduit (6) de sortie de solution diluée, ladite installation étant caractérisée en ce qu'elle comprend, associés à l'électrodialyseur:

— des moyens de prélèvement (9, 10) reliés au conduit (6) de sortie de la solution diluée,
— une cellule de mesure potentiométrique ou ampéremétrique (12), alimentée par les moyens de prélèvement et adaptée pour délivrer un signal de mesure ($S_m$), fonction de la teneur en une espèce ionique prédéterminée de la solution diluée,
— une unité (14) de traitement du signal de mesure issu de la cellule (12) adaptée pour délivrer un signal de commande ($S_a$),
— un réservoir (16) d'une solution contenant des espèces ioniques précitées,
— un circuit (15, 17) de distribution de la solution contenue dans le réservoir (16) vers l'entrée de l'électrodialyseur, ledit circuit comprenant une pompe (15) commandée par le signal de commande ($S_a$) issu de l'unité de traitement (14) précitée.

11. Installation d'électrodialyse selon la revendication 10, dans laquelle la cellule de mesure (12) est reliée à un réservoir (11) d'une solution tampon de force ionique et comprend une électrode spécifique de l'espèce ionique précitée, une électrode de référence et des moyens de mesure du signal électrique entre lesdites électrodes.

12. Installation d'électrodialyse selon l'une des revendications 10 ou 11, caractérisé en ce qu'elle comprend des moyens (8) de mesure de la conductivité du bain à la sortie (6) de solution diluée, l'unité de traitement (14) recevant le signal de conductivité ($S_c$) issu de ces moyens de mesure et étant d'un type programmable, adapté pour pouvoir délivrer un signal de commande ($S_a$) fonction du signal de mesure ($S_m$) issu de la cellule et du signal de conductivité ($S_c$).

## Patentansprüche

1. Verfahren zur Regelung eines Elektrodialysators für ein metallisches zyaniertes Bad der Art, die einen Stapel von in einem elektrischen Feld angeordneten Ionenaustauschmembranen, einen Eingang für das zu behandelnde zyanierte Bad, einen Ausgang für konzentrierte Lösung und einen Ausgang für verdünnte Lösung umfaßt, wobei das besagte Verfahren dadurch gekennzeichnet ist, daß es im Messen des Gehalts an freiem Zyanid der verdünnten Lösung am Ausgang des Elektrodialysators sowie im Zusatz zu dem zyanierten Bad am Eingang des Elektrodialysators einer freie Zyanide in einer im Verhältnis zu dem gemessenen Gehalt umgekehrt proportionalen Menge enthaltenden Zyanidlösung besteht.

2. Verfahren nach Anspruch 1 zur Regelung eines mit einem zyanierten Bad von sehr annähernd konstanter gegebener Metallkonzentration gespeisten Elektrodialysators, dadurch gekennzeichnet, daß man für den Wert der Metallkonzentration des betreffenden Bades im voraus einen Schwellwert des Gehalts an freiem Zyanid bestimmt, der höher ist als der Grenzgehalt, der der Löslichkeitsgrenze der metallischen Zyanide und metallischen Hydroxide entspricht, sowie dadurch, daß man zu dem zu behandelnden zyanierten Bad die Zyanidlösung zusetzt, wenn der gemessene Gehalt den vorbestimmten Schwellwert unterschreitet oder diesem gleich wird.

3. Verfahren nach Anspruch 2, dadurch gekennzeichnet, daß der Schwellwert des Gehalts durch einen an einem Probebad, dessen Konzentration der des zu behandelnden Bads entspricht, durchgeführten Versuch bestimmt wird, der darin besteht, daß man den Gehalt an freiem Zyanid bestimmt, von dem an die Leistung des Elektrodialysators scharf abnimmt, und einen Schwellwert des Gehalts wählt, der dem besagten bestimmten Gehalt zusätzlich einer Sicherheitsspanne gleich ist.

4. Verfahren nach Anspruch 1 zur Regelung eines mit einem metallischen zyanierten Bad gespeisten Elektrodialysators, bei dem die Metallkonzentration des besagten Bades der Zeit nach veränderlich ist, dadurch gekennzeichnet, daß man im voraus in Abhängigkeit von der Leitfähigkeit die Kennlinie der Änderung eines Schwellwerts des Gehalts an freiem Zyanid, der höher ist als der Grenzgehalt, der der Löslichkeitsgrenze der metallischen Zyanide und metallischen Hydroxide entspricht, bestimmt, die Leitfähigkeit des Bades am Ausgang für verdünnte Lösung des Elektrodialysators mißt und dem zu behandelnden zyanierten Bad die Zyanidlösung zusetzt, sobald der gemessene Gehalt unter den dem gemessenen Leitfähigkeitswert entsprechenden Schwellwert absinkt oder diesem gleich wird.

5. Verfahren nach Anspruch 4, dadurch gekennzeichnet, daß die Kennlinie für die Änderung des Gehaltsschwellwerts durch Versuche bestimmt wird, die an Probebädern abgestufter Konzentrationen ausgeführt werden, wobei jeder Versuch darin besteht, daß man die Leitfähigkeit des Bades mißt und den Gehalt an freiem Zyanid bestimmt, von dem an die Leistung des Elektrodialysators scharf abnimmt, wobei der Schwellwert des Gehalts so gewählt wird, daß er dem besagten bestimmten Gehalt zusätzlich einer Sicherheitsspanne gleich ist.

6. Verfahren zur Regelung nach einem der Ansprüche 1, 2, 3, 4 oder 5, dadurch gekennzeichnet, daß man den Gehalt an freiem Zyanid der verdünnten Lösung kontinuierlich oder sequentiell mißt und die Einspritzung einer kontinuierlichen Menge der Zyanidlösung in das zu behandelnde Bad bewirkt, wenn der gemessene Gehalt unter den Schwellwert des Gehalts absinkt, und die besagte Einspritzung unterbricht, sobald dieser gemessene Gehalt wieder oberhalb des besagten Schwellwerts ansteigt.

7. Verfahren zur Regelung nach Anspruch 6, dadurch gekennzeichnet, daß das Messen des Gehalts an freiem Zyanid darin besteht, daß man eine Menge der verdünnten Lösung entnimmt, sie in einer Zelle zum Umlauf bringt, die eine spezifische Elektrode von freiem Zyanid und eine Bezugselektrode enthält, und das für das pCN repräsentative elektrische Signal zwischen den beiden Elektroden mißt.

8. Verfahren zur Regelung nach Anspruch 7, dadurch gekennzeichnet, daß man zu der Menge entnommener verdünnter Lösung eine Pufferlösung mit Ionenkraft beimischt, die in der Lage ist, dem Gemisch eine im wesentlichen konstante Ionenkraft zu vermitteln, die viel höher ist als jene der verdünnten Lösung.

9. Verfahren zur Regelung nach einem der Ansprüche 1, 2, 3, 4, 5, 6, 7 oder 8, dadurch gekennzeichnet, daß man eine Lösung von Natrium- oder Kaliumzyanid zusetzt.

10. Anlage für Elektrodialyse, die insbesondere die Durchführung des Verfahrens entsprechend einem der vorstehenden Ansprüche gestattet, umfassend einen Elektrodialysator (1) der Art, die einen Stapel von Ionenaustauschmembranen (2, 3), Elektroden (4) zu beiden Seiten des besagten Stapels, mindestens eine Leitung (5) für die Zufuhr eines zu behandelnden Bades, eine Leitung (7) zum Ablassen konzentrierter Lösung und eine Leitung (6) zum Ablassen verdünnter Lösung umfaßt, wobei die besagte Anlage dadurch gekennzeichnet ist, daß sie in Verbindung mit dem Elektrodialysator die folgenden Teile umfaßt:

—— Mittel zur Entnahme (9, 10), die mit der Ablaßleitung (6) für verdünnte Lösung in Verbindung stehen,

—— eine Spannungs- oder Strommeßzelle (12), die durch die Entnahmemittel gespeist wird und so beschaffen ist, daß sie ein Meßsignal ($S_m$) liefert, das dem Gehalt an einer vorbestimmten ionischen Verbindung der verdünnten Lösung entspricht,

—— eine Einheit (14) zum Aufbereiten des von der Zelle (12) abgegebenen Meßsignals, die so beschaffen ist, daß sie ein Steuersignal ($S_a$) liefert,

— ein Reservoir (16) für eine die besagten ionischen Verbindungen enthaltende Lösung,

— einen Kreislauf (15, 17) zur Verteilung der in dem Behälter (16) enthaltenen Lösung auf den Eingang des Elektrodialysators zu, wobei der besagte Kreislauf eine durch das Steuersignal ($S_a$) von der besagten Aufbereitungseinheit (14) gesteuerte Pumpe (15) umfaßt.

11. Anlage zur Elektrodialyse nach Anspruch 10, bei der die Meßzelle (12) mit einem Reservoir (11) für eine Pufferlösung mit Ionenkraft in Verbindung steht und die eine spezifische Elektrode der besagten ionischen Verbindung sowie eine Bezugselektrode und Mittel zum Messen des elektrischen Signals zwischen den besagten Elektroden umfaßt.

12. Anlage zur Elektrodialyse nach einem der Ansprüche 10 oder 11, dadurch gekennzeichnet, daß sie Mittel (8) zum Messen der Leitfähigkeit des Bades am Ausgang (6) der verdünnten Lösung umfaßt, wobei die Aufbereitungseinheit (14) das von diesen Meßmitteln ausgehende Leitfähigkeitssignal ($S_c$) empfängt, programmierbarer Art und so beschaffen ist, daß sie ein Steuersignal ($S_a$) in Abhängigkeit von dem von der Zelle abgegebenen Meßsignal ($S_m$) und dem Leitfähigkeitssignal ($S_c$) liefern kann.

## Claims

1. Process for regulating an electrodialyser for a cyanided metal bath of the type comprising a stack of ion exchange membranes arranged within an electric field, an inlet for the cyanided bath to be treated, an outlet for the concentrated solution and an outlet for the dilute solution, said process being characterised in that it consists in measuring the content of free cyanide of the dilute solution at the outlet of the electrodialyser and in adding to the cyanided bath at the inlet of the electrodialyser a cyanide solution containing free cyanide in an amount inversely proportional to the measured content.

2. Process according to claim 1 for regulating an electrodialyser fed with cyanided bath of a given metal concentration which is very approximately constant, characterised in that, as a preliminary operation, one determines for the value of the metal concentration of the bath in question a free cyanide content threshold higher than the limit content corresponding to the limit of solubility of the metallic cyanides and metallic hydroxides, and in that one adds to the cyanided bath to be treated the cyanide solution, once the measured content becomes lower or equal to the predetermined threshold.

3. Process according to claim 2, characterised in that the content threshold is determined by a test carried out on a specimen bath, the concentration of which corresponds to that of the bath to be treated, consisting in determining the content of free cyanide, starting from which the output of the electrodialyser undergoes a sudden drop, and in choosing a content threshold equal to said determined content plus a margin of security.

4. Process according to claim 1 for regulating an electrodialyser fed with a metallic cyanide bath with a metal concentration variable in time, characterised in that, as a preliminary operation, one determines, as a function of conductivity, the curve of variation of a free cyanide content threshold higher than the limit content, corresponding to the limit of solubility of the metal cyanides and metallic hydroxides, measures the conductivity of the bath at the outlet for diluted solution of the electrodialyser and adds to the cyanided bath to be treated the cyanide solution, once the measured content becomes lower than or equal to the threshold corresponding to the measured value of conductivity.

5. Process according to claim 4. characterised in that the curve of variation of the content threshold is determined by tests carried out on specimen baths of graded concentrations, each test consisting in measuring the conductivity of the bath and in determining the content of free cyanide, starting from which the output of the electrodialyser undergoes an abrupt drop, the content threshold being chosen equal to said determined content plus a margin of security.

6. Process of regulation according to one of claims 1, 2, 3, 4 or 5, characterised in that one carries out continuous or sequential measurement of the free cyanide content of the diluted solution and controls the injection of a continuous flow of cyanide solution into the bath to be treated, once the measured content falls below the content threshold, as well as the discontinuation of said injection, once said measured content returns above said threshold.

7. Process of regulation according to claim 6, characterised in that measurement of the free cyanide content consists in extracting an amount of diluted solution, causing it to circulate within a cell containing a specific electrode of free cyanide and a reference electrode, and in measuring the electric signal, representative of the pCN between the two electrodes.

8. Process of regulation according to claim 7, characterised in that one mixes to the amount of diluted solution extracted a buffer solution of ionic strength, capable of imparting to the mixture a substantially constant ionic strength, much higher than that of the diluted solution.

9. Process of regulation according to one of claims 1, 2, 3, 4, 5, 6, 7 or 8, characterised in that one adds a solution of sodium or potassium cyanide.

10. Apparatus for electrodialysis enabling, in particular, the implementation of the process according to one of the preceding claims, comprising an electrodialyser (1) of the type comprising a stack of ion exchange membranes (2, 3), electrodes (4) located on either side of said stack, at least one line (5) for feeding a bath to be treated, a line (7) for discharging concentrated solution and a line (6) for discharging diluted solution, said apparatus being characterised in that it comprises, associated with the electrodialyser

— extraction means (9, 10) connected to line (6) for discharging the diluted solution,

— a voltage- or current-measuring cell (12), fed by the extraction means and capable of supplying a measuring signal ($S_m$), in accordance with the content of a predetermined ionic compound of the diluted solution,

— a unit (14) for treating the measurement signal emanating from cell (12), which is capable of supplying a control signal ($S_a$),

a reservoir (16) for a solution containing the above ionic compounds,

— a circuit (15, 17) for distributing the solution contained in reservoir (16) towards the inlet of the electrodialyser, said circuit comprising a pump (15) controlled by the control signal ($S_a$) emanating from said treatment unit (14).

11. Electrodialysis apparatus according to claim 10, in which measuring cell (12) is connected to a reservoir (11) of a buffer solution of ionic strength and comprises a specific electrode of the above ionic compound, a reference electrode and means for measuring the electric signal between said electrodes.

12. Electrodialysis apparatus according to one of claims 10 or 11, characterised in that it comprises means (8) for measuring the conductivity of the bath at outlet (6) for diluted solution, treatment unit (14) receiving the conductivity signal ($S_c$) emanating from these measuring means and being of a programmable type capable of supplying a command signal ($S_a$) in accordance with measurement signal ($S_m$) from the cell and with conductivity signal ($S_c$).

Fig. 1

Bain à traiter

Sortie solution concentrée

Sortie solution diluée

Rejet

EP 0 228 139 B1

Fig. 2

EP 0 228 139 B1